# EUROPEAN PATENT SPECIFICATION

(11) **EP 0 451 825 B1**
(45) Date of publication and mention of the grant of the patent: **13.07.1994**
(21) Application number: 91105705.7
(22) Date of filing: 10.04.1991
(51) Int. Cl.: B60R 16/02, H04L 12/28

(54) **Multi-transmission method and multi-transmission system for a vehicle**
Vielfach-Übertragungsverfahren und System für ein Fahrzeug
Système et méthode de multi-transmission pour un véhicule

(30) Priority: 12.04.1990 JP 97026/90
(43) Date of publication of application: 16.10.1991
(73) Proprietor: Sumitomo Wiring System, Ltd., Yokkaichi-shi Mie-ken (JP); SUMITOMO ELECTRIC INDUSTRIES, LTD., Osaka-shi, Osaka 541 (JP)
(72) Inventor: Kobayashi, Nobuyuki, Age-gun, Mie-ken (JP); Hattori, Katunori, Suzuka-shi, Mie-ken (JP); Kominami, Yukio, Suzaka-shi, Mie-ken (JP); Takahashi, Shinichiro, c/o Osaka Works of, Konohana-ku, Osaka (JP)
(74) Representative: VOSSIUS & PARTNER

(56) References cited:
- IEEE SPECTRUM. vol. 23, no. 6, June 1986, NEW YORK US pages 53 - 59; R.K.JURGEN: "COMING FROM DETROIT: NETWORKS ON WHEELS"
- 39th IEEE VEHICULAR TECHNOLOGY CONFERENCE vol. 1, May 1989, IEEE NEW YORK US pages 437 - 442; Y.HARATA et al.: "A SIMPLIFIED SERIAL COMMUNICATION NETWORK WITHIN A VEHICLE"
- MACHINE DESIGN. vol. 61, no. 11, June 1989, CLEVELAND US pages 102 - 108; L.A.BERARDINIS: "AUTOMAKERS MOVE TO MULTIPLEXING"

## Description

The present invention relates to a multi-transmission method and a multi-transmission system for us in a vehicle for transmitting signals through bus lines and a multi-transmission terminal which are provided in various places in a vehicle for data communication.

### 2. Description of the Prior Art

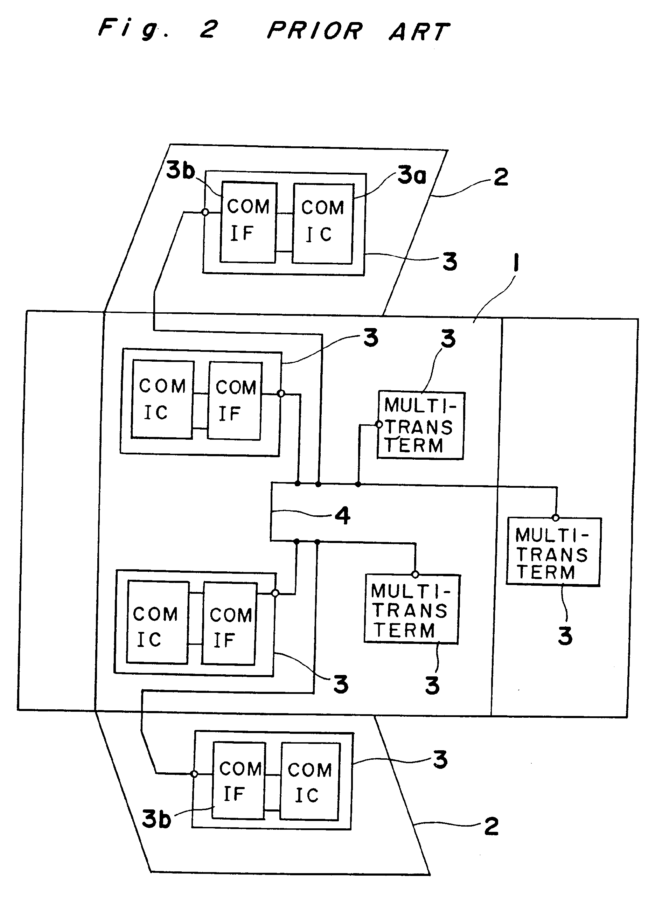

A prior art system for multi-transmission data in a vehicle is shown in Fig. 2. The prior art multi-transmission system has a plurality of multi-transmission terminals 3 equipped in a vehicle compartment 1 and vehicle doors 2. Each multi-transmission terminal 3, defined by an electronic control (EC) unit has a transmission control circuit 3a and a transmission interface 3b, and is disposed in various places in the vehicle compartment 1 and also in vehicle doors 2. The multi-transmission terminals 3 are connected to a high speed bus line 4.

Various loads provided in the vehicle are controlled in such a manner that, by the operation of a control switch equipped in the vicinity of a driver seat, an operation signal is generated which is input to the multi-transmission terminal 3 near the driver seat and is transmitted to the multi-transmission terminal 3 near the load to be controlled through a high speed bus line 4. And then, the operation signal is transmitted to the load to be controlled, thereby controlling the load.

Furthermore, conditions of various loads are displayed on a monitor panel positioned near the driver seat in such a manner that, a detection signal generated by a detection sensor is input to the multi-transmission terminal 3 near the load and the detection signal is multi-transmitted to the multi-transmission terminal 3 near the driver seat through the bus line 4 from the multi-transmission terminal 3 near the load so as to display the condition of the load on the monitor panel.

In addition, bus line 4 is used for mutually transmitted signals among the loads in a similar manner as that mentioned above. For the purpose of multi-transmission through the common bus line 4, each of the multi-transmission terminals 3 is provided with a communication function based on a predetermined protocol. The transmission speed is set to be the same as the response speed of the load which generally requires a high response speed. The delay time is usually set to be about 10 msec.

According to another known type of multi-transmission system, one master terminal is provided in a vehicle compartment and is connected to each of terminals at the various places in the vehicle in a star connection structure.

In the prior art multi-transmission system, the loads which do not require a high speed data transmission but operate sufficiently with a relatively slow speed, e.g., 50 msec, such as a power window motor or mirror motor provided in the door, are also equipped with high speed communication function with a delay time of 10 msec as in the same manner as those provided in the high speed response loads. Accordingly, the prior art multi-transmission system results in complicated and expensive structure.

The object of the present invention is therefore to provide an improved multi-transmission system and a multi-transmission method which solves these problems.

In order to achieve the aforementioned object, the present invention solves the above problem by providing each of the door terminals with a simple and inexpensive structure suitable for use in a low speed transmission.
A conventional method for multi-transmission in a vehicle comprises the steps of ; connecting mutually to each other, through a high speed bus line, a plurality of multi-transmission terminals each of which is equipped in a vehicle compartment or at a vehicle door and has a communication control circuit and a communication interface and multi-transmission signals among the multi-transmission terminals through the high speed bus line . A method of multi-transmission according to the present invention is characterized by further comprising, in addition to the above steps, the following steps; making a repeating terminal from each of said multi-transmission terminals positioned nearest to the door by providing said multi-transmission terminal with a protocol conversion function between a high speed transmission and a low speed transmission, connecting each of said repeating terminals to said multi-transmission terminal positioned at the corresponding door through a low speed bus line, inputting into the multi-transmission terminals positioned at the door, transmitting signals which do not require a high speed bus line and include detection signals generated by means to detect the electric load of an equipment at a door, and transmitting said transmission signals to said multi-transmission terminal positioned at the door through said low speed bus line, said repeating terminal and a part of said high speed bus line.

The multi-transmission system according to the present invention has a feature that the transmission among the door terminals positioned at the doors and the relay terminals located in the vehicle near the door is carried out through the low speed bus line. This feature makes it possible to use inexpensive door multi-transmission terminal, resulting in cost effective transmission system with a simple structure suitable for a low speed but stable communication function.

These and other objects and features of the present invention will become clear from the following description taken in conjunction with the preferred embodiment thereof with reference to the accompanying drawings throughout which like parts are designated by like reference numerals, and in which:
Fig. 1 is a block diagram of a multi-transmission system in a vehicle according to a preferred embodiment of the present invention; and
Fig. 2 is a block diagram of a multi-transmission system in a vehicle according to prior art.

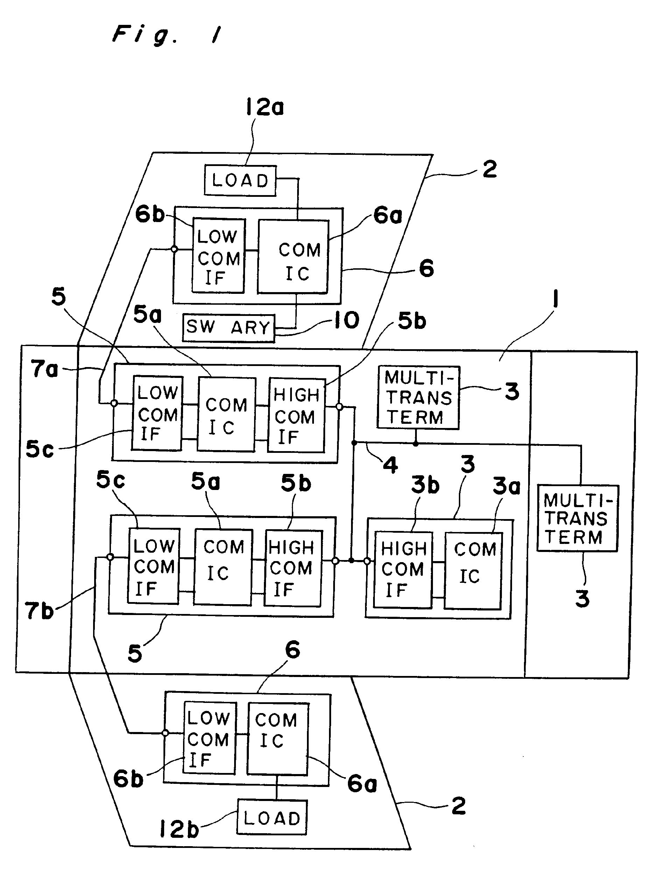

Referring to Fig. 1, a block diagram of a multi-transmission system for use in a two-door vehicle according to the present invention is shown. A plurality of EC (electronic control) units 3, 5, 6 are equipped in a vehicle compartment, in which EC units 3 and 6 are used as multi-transmission terminals and EC unit 5 is used as a relay terminal.

The EC units 5 serving as the relay terminals are provided in the vehicle compartment 1 near the doors, respectively. Each EC unit 5 has a communication control IC 5a, a high speed transmission interface 5b and a low speed transmission interface 5c. The communication control IC 5a has a protocol conversion function between a high speed data transmission protocol and a low speed data transmission protocol.

The EC units 3 serving as the multi-transmission terminals are also provided in a vehicle compartment 1. Each EC unit 3 has a communication interface 3a and a high speed control IC 3b of a structure similar to those described above in connection with Fig. 2.

The terminals 3 and 5 are mutually connected by a high speed bus line 4.

The EC units 6 serving as the multi-transmission terminals for the data used in doors are provided in the vehicle doors 2, respectively. Each EC unit 6 has a low speed communication control IC 6a and a low speed communication interface 6b.

Each terminal 6 in the door and the terminal 5 located near that door are connected by a low speed bus line 7a, 7b.

Every or some of EC units 3, 5, 6 are coupled with one or more loads, such as a power window motor, a door mirror motor, a ventilation motor, to be controlled. For the sake of brevity, it is assumed that EC units 6 provided in the door adjacent a driver's seat and the door adjacent a side seat next to the driver's seat are coupled with power window motors 12a and 12b, respectively.

Also, every or some of EC units 3, 5, 6 are coupled with a switch array for initiating and controlling the various loads. For the sake of brevity, it is assumed that EC unit 6 provided in the door adjacent the driver's seat is coupled with a switch array 10 including a driver's-seat window operation switch for controlling the window adjacent the driver's seat and a side-seat window operation switch for controlling the window adjacent the side seat.

In operation, it is assumed that windows are all closed. When the side-seat window operation switch in the switch array 10 is operated for opening the window adjacent the side seat, the communication control IC 6a produces a side-window open command signal based on the low speed data transmission protocol. The side-window open command signal is output from the low speed communication interface 6b through bus line 7a to low speed communication interface 5c in the EC unit 5 adjacent the driver's seat.

Then, in the EC unit 5 adjacent the driver's seat, the side-window open command signal taken by the low speed communication interface 5c is transferred to the communication control IC 5a. In the control IC 5a, the protocol conversion is carried out so that the side-window open command signal based on the low speed data transmission protocol is converted to the same but based on the high speed data transmission protocol. Then, the side-window open command signal based on the high speed transmission protocol is transmitted from the high speed communication interface 5b through bus line 4 to high speed communication interface 5b in the EC unit 5 adjacent the side seat.

Then, in the EC unit 5 adjacent the side seat, the side-window open command signal taken by the high speed communication interface 5b is transferred to the communication control IC 5a, in which the protocol conversion is carried out so that the side-window open command signal based on the high speed data transmission protocol is converted to the same but based on the low speed data transmission protocol. Then, the side-window open command signal based on the low speed transmission protocol is transmitted from the low speed communication interface 5c through bus line 7b to low speed communication interface 6b in the EC unit 6 in the door near the side seat.

Then, in the EC unit 6 in the door near the side seat, the side-window open command signal is transferred to the communication control IC 6a which then produces a window open signal to load 12b, which is the power window motor. Thus, the power window motor 12b is driven to open the window.

When the window driven by the power window motor 12b opens fully, a limit switch (not show) provided in association with the window produces a full-open signal. The full-open signal is transmitted in a direction reverse to that described above from EC unit 6, through bus line 7b to EC unit 5 near the side seat, and then through bus line 4 to EC unit 5 near the driver's seat. And further through bus line 7a to EC unit 6 in the door adjacent the driver's seat. Thus, by the transmitted full-open signal, the side-seat window operation switch in the switch array 10 is reset.

In a similar manner described above, other loads coupled to the EC unit 6 in the door adjacent the side seat can be controlled by the operation of switches in the switching array 10.

In the above described multi-transmission system, the data transmission between the EC unit 6 and EC unit 5 is carried out with the low speed data transmission protocol, and the data transmission between the EC units 5 and 3 are carried out with the high speed data transmission protocol.

Since the cost of the EC units 6 which operates under the low speed data transmission protocol is relatively low when compared with the EC units 5 or 3 that operates under the high speed data transmission protocol, it is possible to reduce the manufacturing cost of the entire multi-transmission system.

Furthermore, since the EC units 6 is small in size, the freedom of locating the EC units 6 in the narrow space, such as in the door is increased.

Furthermore, since the EC units 6 operates with a high reliability due to its low speed and stable operation, the loads coupled to the EC units 6 can be controlled with a high reliability.

The multi-transmission system described above in connection with Fig. 1 is employed for a two-door vehicle, but can be applied to four-door vehicle or any other type of vehicles and mobiles.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A multi-transmission system for a vehicle comprising:
a first type multi-transmission terminal (6) comprising:
a first communication control means (6a) for processing data based on a low speed data transmission protocol; and
a first low speed communication interface (6b) for effecting the input and output of data at a low speed;
a second type multi-transmission terminal (5) comprising:
a second low speed communication interface (5c) for effecting the input and output of data at a low speed;
a second communication control means (5a) for converting protocol between a high speed data transmission protocol and low speed data transmission protocol; and
a first high speed communication interface (5b) for effecting the input and output of data at a high speed;
a third type multi-transmission terminal (3) comprising:
a second high speed communication interface (3b) for effecting the input and output of data at a high speed; and
a third communication control means (3a) for processing data based on a high speed data transmission protocol;
a first bus structure (7a, 7b) for connecting between low speed communication interfaces; and
a second bus structure (4) for connecting between high speed communication interfaces.

2. A multi-transmission system as claimed in Claim 1, wherein said first type multi-transmission terminal (6) is installed in a vehicle door.

3. A multi-transmission system as claimed in Claim 1 or 2, wherein said second type multi-transmission terminal (6) is installed in vehicle compartment near said vehicle door.

4. A method for multi-transmission in a vehicle comprising the steps of:
providing a first type multi-transmission terminal (6) comprising:
a first communication control means (6a) for processing data based on a low speed data transmission protocol; and
a first low speed communication interface (6b) for effecting the input and output of data at a low speed;
providing a second type multi-transmission terminal (5) comprising:
a second low speed communication interface (5c) for effecting the input and output of data at a low speed;
a second communication control means (5a) for converting protocol between a high speed data transmission protocol and low speed data transmission protocol; and
a first high speed communication interface (5b) for effecting the input and output of data at a high speed;
providing a third type multi-transmission terminal (3) comprising:
a second high speed communication interface (3b) for effecting the input and output of data at a high speed; and
a third communication control means (3a) for processing data based on a high speed data transmission protocol;
providing a first bus structure (7a, 7b) for connecting between low speed communication interfaces;
providing a second bus structure (4) for connecting between high speed communication interfaces;
transmitting data at a low speed in said first bus structure; and
transmitting data at a high speed in said second bus structure.

## Patentansprüche

1. Vielfachübertragungssystem für ein Fahrzeug, das aufweist:
einen ersten Typ eines Vielfachübertragungsterminals (6) mit:
einer ersten Übertragungssteuereinrichtung (6a) zur Verarbeitung von Daten auf der Basis eines Datenübertragungsprotokolls für niedrige Übertragungsgeschwindigkeit; und
einer ersten Niedriggeschwindigkeits-Übertragungsschnittstelle (6b) zur Ausführung der Eingabe und Ausgabe von Daten mit niedriger Geschwindigkeit;
einen zweiten Typ eines Vielfachübertragungsterminals (5) mit:
einer zweiten Niedriggeschwindigkeits-Übertragungsschnittstelle (5c) zur Ausführung der Eingabe und Ausgabe von Daten mit niedriger Geschwindigkeit;
einer zweiten Übertragungssteuereinrichtung (5a) zur Konvertierung des Protokolls zwischen einem Datenübertragungsprotokoll für hohe Geschwindigkeit und einem Datenübertragungsprotokoll für niedrige Geschwindigkeit; und
einer ersten Hochgeschwindigkeits-Übertragungsschnittstelle (5b) zur Ausführung der Eingabe und Ausgabe von Daten mit hoher Geschwindigkeit;
einen dritten Typ eines Vielfachübertragungsterminals (3) mit:
einer zweiten Hochgeschwindigkeits-Übertragungsschnittstelle (3b) zur Ausführung der Eingabe und Ausgabe von Daten mit hoher Geschwindigkeit; und
einer dritten Übertragungssteuereinrichtung (3a) zur Verarbeitung von Daten auf der Basis eines Datenübertragungsprotokolls für hohe Geschwindigkeit;
eine erste Busstruktur (7a, 7b) für die Verbindung zwischen den Niedriggeschwindigkeits-Übertragungsschnittstellen; und
eine zweite Busstruktur (4) für die Verbindung zwischen den Hochgeschwindigkeits-Übertragungsschnittstellen.

2. Vielfachübertragungssystem nach Anspruch 1, wobei das Vielfachübertragungsterminal (6) vom ersten Typ in einer Fahrzeugtür installiert ist.

3. Vielfachübertragungssystem nach Anspruch 1 oder 2, wobei das Vielfachübertragungsterminal (6) vom zweiten Typ im Fahrzeuginnenraum in der Nähe der Fahrzeugtür installiert ist.

4. Vielfachübertragungsverfahren in einem Fahrzeug, mit den folgenden Schritten:
Bereitstellen eines ersten Typs eines Vielfachübertragungsterminals (6) mit:
einer ersten Übertragungssteuereinrichtung (6a) zur Verarbeitung von Daten auf der Basis eines Datenübertragungsprotokolls für niedrige Geschwindigkeit; und
einer ersten Niedriggeschwindigkeits-Übertragungsschnittstelle (6b) zur Ausführung der Eingabe und Ausgabe von Daten mit niedriger Geschwindigkeit;
Bereitstellen eines zweiten Typs eines Vielfachübertragungsterminals (5) mit:
einer zweiten Niedriggeschwindigkeits-Übertragungsschnittstelle (5c) zur Ausführung der Eingabe und Ausgabe von Daten mit niedriger Geschwindigkeit;
einer zweiten Übertragungssteuereinrichtung (5a) zur Konvertierung des Protokolls zwischen einem Datenübertragungsprotokoll für hohe Geschwindigkeit und einem Datenübertragungsprotokoll für niedrige Geschwindigkeit; und
einer ersten Hochgeschwindigkeits-Übertragungsschnittstelle (5b) zur Ausführung der Eingabe und Ausgabe von Daten mit hoher Geschwindigkeit;
Bereitstellen eines dritten Typs eines Vielfachübertragungsterminals (3) mit:
einer zweiten Hochgeschwindigkeits-Übertragungsschnittstelle (3b) zur Ausführung der Eingabe und Ausgabe von Daten mit hoher Geschwindigkeit; und
einer dritten Übertragungssteuereinrichtung (3a) zur Verarbeitung von Daten auf der Basis eines Datenübertragungsprotokolls für hohe Geschwindigkeit;
Bereitstellen einer ersten Busstruktur (7a, 7b) für die Verbindung zwischen Niedriggeschwindigkeits-Übertragungsschnittstellen;
Bereitstellen einer zweiten Busstruktur (4) für die Verbindung zwischen Hochgeschwindigkeits-Übertragungsschnittstellen;
Übertragung von Daten mit niedriger Geschwindigkeit in der ersten Busstruktur; und
Übertragung von Daten mit hoher Geschwindigkeit in der zweiten Busstruktur.

## Revendications

1. Ensemble de transmission multiple destiné à un véhicule, comprenant :
un terminal (6) de transmission multiple d'un premier type, comprenant
un premier dispositif (6a) de commande de communication destiné à traiter des données d'après un protocole de transmission de données à faible vitesse, et
un premier circuit d'interface de communication à faible vitesse (6b) destiné à réaliser l'entrée et la sortie de données à faible vitesse,
un terminal de transmission multiple d'un second type (5) comprenant :
un second circuit d'interface de communication à faible vitesse (5c) destiné à assurer l'entrée et la sortie de données à faible vitesse,
un second dispositif (5a) de commande de communication destiné à transformer un protocole entre un protocole de transmission de données à grande vitesse et un protocole de transmission de données à faible vitesse, et
un premier circuit d'interface de communication à grande vitesse (5b) destiné à assurer l'entrée et la sortie des données à grande vitesse,
un terminal de transmission multiple d'un troisième type (3) comprenant :
un second circuit d'interface de communication à grande vitesse (3b) destiné à assurer l'entrée et la sortie des données à grande vitesse, et
un troisième dispositif (3a) de commande de communication destiné à traiter les données d'après un protocole de transmission de données à grande vitesse,
une première structure de bus (7a, 7b) destinée à connecter des circuits d'interface de communication à faible vitesse, et
une seconde structure de bus (4) destinée à connecter des circuits d'interface de communication à grande vitesse.

2. Ensemble de transmission multiple selon la revendication 1, dans lequel le terminal de transmission multiple du premier type (6) est installé dans une porte de véhicule.

3. Ensemble de transmission multiple selon la revendication 1 ou 2, dans lequel le terminal de transmission multiple du second type (6) est installé dans un compartiment de véhicule près d'une porte du véhicule.

4. Procédé de transmission multiple dans un véhicule, comprenant les étapes suivantes :
la disposition d'un terminal (6) de transmission multiple d'un premier type qui comprend
un premier dispositif de commande de communication (6a) destiné à traiter des données à l'aide d'un protocole de transmission de données à faible vitesse, et
un premier circuit d'interface de communication à faible vitesse (6b) destiné à assurer l'entrée et la sortie de données à faible vitesse,
la disposition d'un terminal de transmission multiple d'un second type (5) comprenant :
un second circuit d'interface de communication à faible vitesse (5c) destiné à assurer l'entrée et la sortie de données à faible vitesse,
un second dispositif de commande de communication (5a) destiné à transformer le protocole entre un protocole de transmission de données à grande vitesse et un protocole de transmission de données à faible vitesse, et
un premier circuit d'interface de communication à grande vitesse (5b) destiné à assurer l'entrée et la sortie de données à vitesse élevée,
la disposition d'un terminal de transmission multiple d'un troisième type (3) comprenant :
un second circuit d'interface de communication à grande vitesse (3b) destiné à assurer l'entrée et la sortie de données à grande vitesse, et
un troisième dispositif de commande de communication (3a) destiné à traiter des données d'après un protocole de transmission de données à grande vitesse,
la disposition d'une première structure de bus (7a, 7b) pour la connexion des circuits d'interface de communication à faible vitesse,
la disposition d'une seconde structure de bus (4) pour la connexion des circuits d'interface de communication à grande vitesse,
la transmission de données à faible vitesse dans la première structure de bus, et
la transmission de données à grande vitesse dans la seconde structure de bus.
